# EUROPEAN PATENT SPECIFICATION

(11) **EP 4 056 447 B1**
(45) Date of publication and mention of the grant of the patent: **11.12.2024**
(21) Application number: 21851372.9
(22) Date of filing: 10.02.2021
(51) Int. Cl.: B61F 7/00

(54) **GAUGE-VARIABLE WHEELSET AND RAIL VEHICLE**
RADSATZ MIT VERÄNDERLICHER SPURWEITE UND SCHIENENFAHRZEUG
ESSIEU MONTÉ À JAUGE VARIABLE ET VÉHICULE FERROVIAIRE

(30) Priority: 28.07.2020 CN 202010737192
(43) Date of publication of application: 14.09.2022
(73) Proprietor: CRRC Qingdao Sifang Co., Ltd., Qingdao, Shandong 266111 (CN)
(72) Inventor: MA, Lijun, Qingdao, Shandong 266111 (CN); ZHOU, Pingyu, Qingdao, Shandong 266111 (CN); QIAO, Qingfeng, Qingdao, Shandong 266111 (CN); WANG, Xu, Qingdao, Shandong 266111 (CN); ZHANG, Zhenxian, Qingdao, Shandong 266111 (CN)
(74) Representative: Geskes, Christoph
(86) International application number: PCT/CN2021/076579
(87) International publication number: WO 2022/021843

(56) References cited:
- CH-A- 490 214
- CH-A- 502 913
- CN-A- 109 572 740
- CN-A- 111 806 499
- CN-U- 202 358 119
- CN-U- 202 358 119
- DE-A1- 2 010 673
- DE-C- 235 085
- DE-C- 737 575
- ES-A6- 2 021 919
- FR-A- 1 529 679
- FR-A- 849 826

## Description

### CROSS-REFERENCE TO RELATED APPLICATION

The present application claims priority to Chinese application No. 202010737192.X filed on July 28, 2020, entitled "Gauge-Variable Wheelset and Rail Vehicle".

### FIELD OF TECHNOLOGY

The present application relates to the technical field of railway vehicle gauge changing, and in particular, to a gauge-changing wheelset and a railway vehicle. Gauge-changing wheelsets are known from DE 737 575 C, CN 109 572 740 A and CH 502 913 A, for instance.

### BACKGROUND

Transnational passenger and cargo transportation has grown rapidly in recent years. However, different rail gauges of various countries have seriously hindered the transnational rail transportation. In order to solve the problem that the different rail gauges of various countries hinder the transnational railway transportation, a gauge-changing train is proposed, when the train runs on the railway of another country, a distance between wheels on an axle is changeable so as to adapt to the gauge of other countries' railways.

However, traditional gauge-changing wheelset has complex gauge-changing mechanism, cumbersome gauge-changing operations, and low reliability.

### SUMMARY

The present application is intended to address at least one of technical problems in the prior art. Therefore, the present application provides a gauge-changing wheelset having simple gauge-changing operation and high gauge-changing reliability.

The present application further provides a railway vehicle.

According to an embodiment of an aspect of the present application, a gauge-changing wheelset is provided, including an axle, a pair of wheels, a pair of axle sleeves, an outer sleeve and a linkage mechanism;
an outer circumference of a first end of each axle sleeve is provided with a wheel mounting base, an outer circumference of a second end of each axle sleeve is provided with a section of an outer spline extending along an axial direction of the axle sleeve, an inner circumference of the second end of each axle sleeve is provided with a section of a first non-self-locking thread, a pair of the first non-self-locking threads have opposite directions of rotation, and the pair of wheels are fastened on the wheel mounting bases of the pair of axle sleeves;
the axle is provided with two sections of second non-self-locking threads at intervals, each second non-self-locking thread forming a non-self-locking thread pair with the first non-self-locking thread; the wheels are mounted on the axle through the axle sleeves, the first non-self-locking thread is fitted and connected with the second non-self-locking thread, and a part of the axle between the pair of second non-self-locking threads is provided with at least one first raceway circumferentially disposed around the axle;
the outer sleeve is sleeved outside the axle, an inner circumference of the outer sleeve is provided with a second raceway corresponding to and being snap-fitted with the first raceway to form a rolling space in which a rolling element matched therewith is mounted such that the outer sleeve is rotatably connected outside the axle, and an inner spline matched with the outer spline on the axle sleeve is provided on both axial sides of the second raceway inside the outer sleeve and located at a predetermined distance from the second raceway; and
the linkage mechanism is mounted between the axle and the outer sleeve for locking or unlocking rotation of the outer sleeve relative to the axle; and when the rotation of the outer sleeve relative to the axle is unlocked by the linkage mechanism and the wheels are in an unloaded state, the pair of wheels are pushed to rotate synchronously to move closer to each other or away from each other, so as to change the gauge.

According to an embodiment of the present application, an outer circumference of the axle close to a middle portion thereof is provided with a section of outer spline extending in an axial direction of the axle, and the outer spline of the axle is provided with an oblong hole radially extending through the outer spline and having a longitudinal direction coinciding with the axial direction of the axle.

According to an embodiment of the present application, the linkage mechanism includes a locking slip ring, a thrust pin and a locking elastic piece; and
the locking slip ring is slidably sleeved at the outer spline of the axle, and the locking slip ring is provided therein with an inner spline matched with the outer spline of the axle, and provided externally with an outer spline matched with the inner spline of the outer sleeve. An inner wall of the locking slip ring is radially provided with a pair of open grooves having openings communicated with an end of the locking slip ring. The thrust pin passes through the oblong hole, and both ends of the thrust pin extend out of the oblong hole and both ends of the thrust pin exposed outside the oblong hole are embedded inside the pair of the open grooves by the openings of the open grooves. The locking elastic piece is sleeved on the axle, and has an end abutted against an outer wall of the first raceway, and another end abutted against an end of the locking slip ring away from the open groove. When the locking elastic piece is in a natural state, the outer spline outside the locking slip ring is at least partially located in the inner spline of a corresponding side of the outer sleeve to lock the rotation of the outer sleeve.

According to an embodiment of the present application, the gauge-changing wheelset further includes a thrust rod penetrating through a central through hole provided along the axial direction of the axle, an end of the thrust rod penetrates through the central through hole of the axle and abuts against a side of the thrust pin at which the open groove is located, and another end of the thrust rod extends to an end portion of the axle. The thrust rod pushes the locking slip ring to compress the locking elastic piece and disengage from the inner spline of the outer sleeve by applying a thrust to the thrust rod, so as to unlock the rotation of the outer sleeve relative to the axle.

According to an embodiment of the present application, the first non-self-locking thread has a length greater than the length of the second non-self-locking thread and equal to half of the gauge to be changed;
an inner circumference of the outer sleeve is provided with an annular boss at the second raceway, and after the outer sleeve is connected to the axle, a pair of mounting spaces for the axle sleeves are formed between the outer sleeve and the axle at both axial sides of the rolling space;
the second raceway is provided with a rolling element mounting hole through which the rolling element is mounted in the rolling space; and
the locking elastic piece is a locking spring.

According to an embodiment of the present application, the gauge-changing wheelset further includes a thrust converting mechanism, and axle-box bodies mounted at both ends of the axle and outside the wheels;
the thrust converting mechanism includes a mounting base and a jacking shaft, wherein the mounting base is mounted on an outer end of the axle-box body close to an end of the thrust rod, and is provided with a horizontal through hole along the axial direction of each axle-box body;
the jacking shaft is movably inserted in the horizontal through hole and is opposite to the thrust rod, and an open slot is provided in one of the jacking shaft and the mounting base at an opposite position of the jacking shaft to the mounting base and has an axis perpendicular to the axis of the horizontal through hole. A positioning piece is mounted in the open slot and connected with the open slot by an elastic preloaded piece; the other one of the jacking shaft and the mounting base is provided with a positioning recess matched with a positioning end of the positioning piece; and
the positioning end of the positioning piece is located in the positioning recess and when the jacking shaft is in a locked state, the jacking shaft is pushed so that the positioning end of the positioning piece disengages from the positioning recess, to allow the jacking shaft to be in a movable state to push the thrust rod.

According to an embodiment of the present application, the mounting base includes a base body and an extending base extending to a side along the base body, and the base body and the extending base are connected to each other by a frustum-shaped transition connecting base having a large end connected with the base body and a small end connected with the extending base, and a periphery of the base body is provided with connecting holes and the horizontal through hole penetrate through the extending base, the transition connecting base and the base body.

According to an embodiment of the present application, the lower side of the extending base is provided with a notch penetrating through an end thereof;
a jacking portion extends downward from an outer end of the jacking shaft, and the outer end of the jacking shaft is flush with an outer end of the extending base when the positioning end of the positioning piece is located in the positioning recess; and
when the jacking portion is pushed, the positioning end of the positioning piece disengages from the positioning recess and moves along the notch.

According to an embodiment of the present application, the outer end of the extending base is provided with a jacking gland;
the outer end of the jacking shaft is provided with a connecting portion extending downward and inclined toward a direction away from the jacking gland, and the jacking portion is formed at a free end of the connecting portion, and is provided with a vertical flat surface; and
a friction block is mounted on the vertical flat surface of the jacking portion.

According to an embodiment of the present application, the positioning piece is a positioning pin having a positioning end configured to have a convex arc surface, and the positioning recess is configured to have a concave arc surface matched with the convex arc surface; and a part of the convex arc surface is located in the concave arc surface; and
the elastic preloaded piece is a preloaded spring having an end fastened in the open slot, and the other end fastened and sleeved on an end of the positioning pin distal to the positioning end.

According to an embodiment of the present application, a jacking shaft support ring is fixed at the end of the axle and is disposed coaxially with the central through hole. The jacking shaft support ring partially extends inside the central through hole and has an inner diameter matched with an outer diameter of the jacking shaft; and the jacking shaft enters the central through hole through the jacking shaft support ring and is configured to push the thrust rod.

According to an embodiment of another aspect of the present application, provided is a railway vehicle, including a vehicle body and a bogie disposed under the vehicle body, and each of the bogies is provided with a pair of the gauge-changing wheelsets.

One or more technical solutions in the embodiments of the present application mentioned above have at least one of the following technical effects.

For the gauge-changing wheelset according to the embodiments of the present application, by using the technical solutions, the linkage mechanism is mounted between the axle and the outer sleeve for locking or unlocking the rotation of the outer sleeve relative to the axle; and when the rotation of the outer sleeve relative to the axle is unlocked by the linkage mechanism and the wheels are in an unloaded state, the pair of wheels are pushed to rotate synchronously to move closer to each other or away from each other so as to change the gauge, resulting in a simple gauge-changing operation and high reliability in changing gauge.

The railway vehicle according to an embodiment of the present application has all the advantages of the gauge-changing wheelset by being equipped with the above-mentioned gauge-changeable wheelset, which will not be repeated here.

The additional aspects and advantages of this application will be partially given in the following description, and some thereof will be obvious from the following description, or be understood through the practice of the present application.

### BRIEF DESCRIPTION OF THE DRAWINGS

In order to more clearly illustrate technical solutions disclosed in the embodiments of the present application or the prior art, the drawings used in the descriptions of the embodiments or the prior art will be briefly described below. Obviously, the drawings in the following description are only certain embodiments of the present application, and other drawings can be obtained according to the drawings without any creative work for those skilled in the art.
FIG. 1 is a front schematic structural diagram showing an axle sleeve of a gauge-changing wheelset according to an embodiment of the present application;
FIG. 2 is an axial sectional schematic diagram of FIG. 1;
FIG. 3 is a perspective schematic structural diagram showing an axle sleeve of a gauge-changing wheelset according to an embodiment of the present application;
FIG. 4 is a front schematic structural diagram showing an axle of a gauge-changing wheelset according to an embodiment of the present application;
FIG. 5 is an axial sectional schematic structural diagram of an outer sleeve for a motor vehicle according to an embodiment of the present application;
FIG. 6 is an axial sectional schematic structural diagram of an outer sleeve for a trailer according to an embodiment of the present application;
FIG. 7 is an axial sectional schematic structural diagram of a gauge-changing wheelset according to an embodiment of the present application;
FIG. 8 is an axial sectional schematic structural diagram of another gauge-changing wheelset according to an embodiment of the present application; and
FIG. 9 is a partial enlarged view of A in FIG. 8.

### Reference numerals:

10. axle; 11. outer spline of axle; 12. oblong hole; 13. first raceway; 14. second non-self-locking thread; 15. central through hole; 20. axle sleeve; 21. first non-self-locking thread; 22. outer spline of axle sleeve; 23. sliding bearing mounting groove; 24. wheel mounting base; 25. sliding bearing gland mounting groove; 30. wheel; 40. outer sleeve; 41. second raceway; 42. inner spline; 50. axle-box body; 60. locking slip ring; 70. locking spring; 80. thrust pin; 90. thrust rod; 100. thrust converting mechanism; 101. mounting base; 101-1. base body; 101-2. transition connecting base; 101-3. extending base; 102. jacking shaft; 102-1. jacking portion; 103. positioning pin; 104. preloaded spring; 105. friction block; 106. jacking gland; 107. jacking shaft support ring; 110. sliding bearing; 120. gear box; 130. brake disc; 140. gear box mounting base; 150. brake disc mounting interface.

### DETAILED DESCRIPTION

Embodiments of the present application are further described in detail below in conjunction with the drawings and embodiments. The following embodiments are intended to illustrate the application, but are not intended to limit the scope of the application.

In the description of the embodiments of the present application, it is to be noted that the orientation or positional relationships indicated by terms such as "center", "longitudinal", "lateral", "upper", "lower", "front", "rear", "left", "right", "vertical", "horizontal", "top", "bottom", "inside", "outside", etc. are based on the orientation or positional relationship shown in the drawings, and are merely for the convenience of describing the embodiments of the present application and simplifying the description, rather than indicating or implying that the device or component stated must have a particular orientation, is constructed and operated in a particular orientation, and thus is not to be construed as limiting the embodiments of the present application. Moreover, the terms "first", "second", "third", and the like are used for descriptive purposes only and are not to be construed as indicating or implying relative importance.

In the description of the embodiments of the present application, it is to be noted that unless explicitly stated and defined otherwise, the terms "connected with", and "connected" shall be understood broadly, for example, it may be either fixedly connected or detachably connected, or can be integrated; it may be mechanically connected, or electrically connected; it may be directly connected, or indirectly connected through an intermediate medium. The specific meanings of the terms above in embodiments of the present application can be understood by a person skilled in the art in accordance with specific conditions.

In the embodiments of this application, unless otherwise clearly stated and defined, the first feature being located "on" or "under" the second feature means that the first feature is in direct contact with the second feature or the first feature is in contact with the second feature by an intervening media. Also, the first feature being located "on", "above" and "on top of" the second feature may mean that the first feature is directly on or above the second feature, or it simply means that the level of the first feature is higher than the second feature. The first feature being located "under", "below" and "on bottom of" the second feature may mean that the first feature is directly under or below the second feature, or it simply means that the level of the first feature is lower than the second feature.

In the description of this specification, descriptions with reference to the terms "one embodiment", "some embodiments", "examples", "specific examples", or "some examples" etc. mean that specific features, structure, materials or characteristics described in conjunction with the embodiment or example are included in at least one embodiment or example of the embodiments of the present application. In this specification, the schematic expressions of the above terms do not necessarily refer to the same embodiment or example. Also, the described specific features, structures, materials or characteristics can be combined in any one or more embodiments or examples in a suitable manner. In addition, those skilled in the art may integrate and combine the different embodiments or examples and the features of the different embodiments or examples described in this specification without contradicting each other.

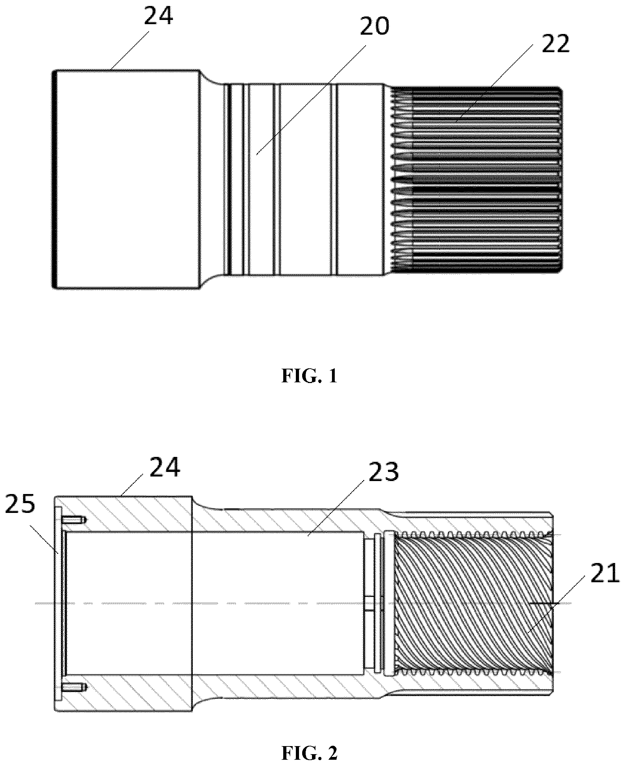

As shown in FIGS. 1 to 9, an embodiment of the present application provides a gauge-changing wheel set.

A gauge-change wheelset according to an embodiment of the present application includes an axle sleeve 20, an outer sleeve 40, an axle 10, a pair of wheels 30 and a linkage mechanism.

An outer circumference of a first end of each axle sleeve is provided with a wheel mounting base 24 having a width consistent with the width of the hub of each wheel 30, the wheel 30 is fastened on the wheel mounting base 24, and may be in interference fit with the wheel mounting base 24 so as to ensure the reliability of the connection between the two.

An inner circumference of the second end of each axle sleeve 20 is provided with a section of a first non-self-locking thread 21. The first non-self-locking threads 21 of the pair of axle sleeves 20 have opposite directions of rotation, and the pair of wheels 30 are fastened on the wheel mounting bases 24 of the pair of axle sleeves 20. The axle 10 is provided with two sections of second non-self-locking threads 14 that form a non-self-locking thread pair with the first non-self-locking thread 21 at intervals, that is, the pair of second non-self-locking threads 14 also have opposite directions of rotation. The wheels 30 are mounted on the axle 10 through the axle sleeves 20, and each first non-self-locking thread 21 is connected with each second non-self-locking thread 14.

When the pair of wheels 30 is pushed inward or outward at the same time after the wheels 30 are unloaded, due to the non-self-locking thread pair having opposite direction of rotation, the pair of wheels 30 may move closer to each other or away from each other when they rotate in the same direction until they move to a set gauge-changing position so as to change the gauge. By arranging the axle sleeve 20, the wheels 30 can easily slide along the axle 10 to change the gauge, and the connection structure of the axle 10 and the wheel 30 is simple, and the gauge-changing reliability is high.

The axle sleeve 20 engages with the second non-self-locking thread 14 of the axle 10 by the first non-self-locking thread 21 for transmitting part of the torque, and generating relative rotation and lateral movement between the axle sleeve 20 and the axle 10 in the unlocked state.

Specifically, the first non-self-locking thread 21 has a length greater than the length of the second non-self-locking thread 14, and the length difference is equal to half of the gauge to be changed, so that both wheels 30 can move half of the gauge to be changed relative to the axle 10 during the rotation by following respective axle sleeves 20, so that a sum of the distances along which both wheels 30 move is equal to the distance of the desired gauge to be changed.

According to an embodiment of the present application, as shown in FIG. 1 to FIG. 3, a sliding bearing mounting groove 23 extending from a first end to a second end of the axle sleeve 20 at an inner circumference of the axle sleeve 20 is used for mounting a sliding bearing 110. The sliding bearing mounting groove 23 extends to a position close to the first non-self-locking thread 21, and has a length equal to a length of the sliding bearing 110. By arranging the sliding bearing 110, it is convenient for the axle sleeve 20 to slide stably and smoothly and a protective effect on the axle sleeve 20 is provided.

According to an embodiment of the present application, the inner circumference of the axle sleeve 20 is provided with a sealing ring mounting groove at the position between the sliding bearing mounting groove 23 and the first non-self-locking thread 21, and the sealing ring mounting groove is used for mounting the sealing ring so as to seal the end of the sliding bearing 110.

According to an embodiment of the present application, the first end of the axle sleeve 20 is provided with a sliding bearing gland mounting groove 25 used to mount the sliding bearing gland. A plurality of threaded holes are disposed at the circumferential bottom surface of the sliding bearing gland mounting groove 25 at intervals, so that the sliding bearing gland is fixed in the sliding bearing gland mounting groove 25 by a fastener and the sliding bearing 110 is fixed by the sliding bearing gland. In addition, an inner circumference of the sliding bearing gland is provided with a sealing ring mounting groove for mounting the sealing ring, thereby forming a sealing structure at both ends of the sliding bearing 110 to prevent grease from entering the joint surface of the sliding bearing 110 and the axle 10.

In order to optimize the structure, according to an embodiment of the present application, the outside of the axle sleeve 20 has a three-stage stepped shape having a descending diameter from the first end to the second end and the wheel mounting base 24 has the largest diameter and the highest strength, and adjacent steps are connected by arc surface transition so as to avoid stress concentration at the connection between the steps.

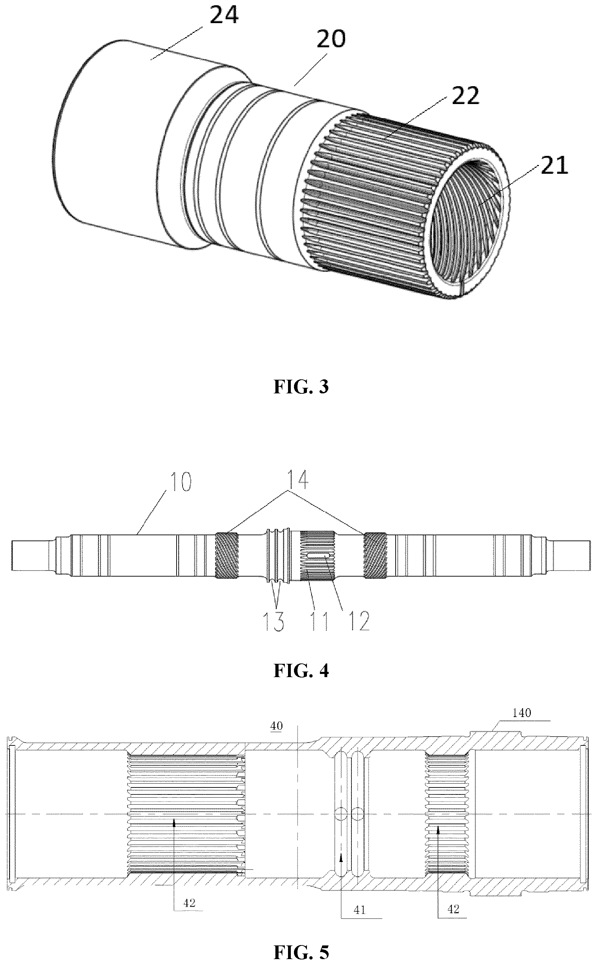

Specifically, as shown in FIG. 4, an outer circumference of the axle 10 close to a middle portion thereof is provided with a section of outer spline extending in the axial direction of the axle 10, and both axial sides of the outer spline 11 of the axle at the outer circumference thereof are provided with a pair of second non-self-locking threads 14 having opposite direction of rotation, that is, the axle 10 is further provided with two sections of second non-self-locking thread 14 having opposite direction of rotation disposed at both axial sides of the outer spline 11. In an embodiment, there is a space between each section of second non-self-locking thread 14 and the outer spline 11 of the axle. The outer spline 11 of the axle 10 is provided with an oblong hole 12 radially extending through the outer spline. That is, the oblong hole 12 is disposed to coincide with the outer spline, and has a longitudinal direction along the axial direction of the axle, that is, the oblong hole 12 has a longitudinal direction consistent with the extending direction of the outer spline 11 of the axle.

Further, a part of the axle 20 between one of the second non-self-locking threads 14 and the outer spline 11 of the axle is provided with at least one first raceway 13 circumferentially disposed around the axle 10, and the first raceway 13 is disposed close to the outer spline 11 of the axle.

In the present embodiment, the first raceway 13 has a cross section of concave semicircle.

The outer sleeve 40 is sleeved outside the axle 10, an inner circumference of the outer sleeve 40 is provided with a second raceway 41 corresponding to the first raceway 13, and the second raceway 41 has the same size and shape as those of the first raceway 13. That is, the second raceway 41 also has a cross section of concave semicircle. The second raceway 41 is provided with a rolling element mounting hole and is snap-fitted with the first raceway 13 to form a circular rolling space in which a rolling element is mounted through the rolling element mounting hole. The rolling element, which may be a rolling ball, has an outer diameter matched with an inner diameter of the rolling space. The rolling space is filled with the rolling elements. In order to prevent impurities such as dust from entering the rolling space, a sealing plug is provided at the rolling element mounting hole. By connecting the outer sleeve 40 with the axle 10 through the rolling element, the outer sleeve 40 is rotatably connected outside the axle 10, in other words, the outer sleeve 40 has rotational degree of freedom, but is limited in the movement degree of freedom, that is, the outer sleeve 40 can rotate relative to the axle 10 but cannot move.

The outer circumference of the second end of the axle sleeve 20 is provided with a section of outer splines extending along its axial direction. After being mounted, the second end of the axle sleeve 20 is located inside the wheel 30 and faces the outer sleeve 40; inner splines 42 matched with the outer splines on the axle sleeve 20 are respectively disposed on both axial sides of the second raceway 41 45- inside the inner circumference of the outer sleeve and located at a predetermined interval from the second raceway 41. The axle sleeve 20 and the outer sleeve 40 are connected through the inner splines 42 of the outer sleeve 40 and the outer splines 22 of the axle sleeve 20 such that the axle sleeve 20 can rotate together with the outer sleeve 40, or the axle sleeve 20 can move axially relative to the outer sleeve 40. In the present embodiment, by arranging the axle sleeve 20, the torque transmission between the wheel 30 and the outer sleeve 40 and the lateral slip between the wheel 30 and the axle 10 are realized. The axle sleeve 20 has a simple and reliable structure, and can be used for the conversion among various gauges.

It should be noted that the "predetermined interval" can be set according to specific needs, and the predetermined interval between the inner splines 42 on both axial sides of the second raceway 41 and the second raceway 41 can be different.

The linkage mechanism according to the present embodiment is mounted between the axle 10 and the outer sleeve 40 for locking or unlocking the rotation of the outer sleeve 40 relative to the axle 10; and when the rotation of the outer sleeve 40 relative to the axle 10 is unlocked by the linkage mechanism and the wheels 30 are in an unloaded state, the pair of wheels 30 are pushed to rotate synchronously such that they move closer to each other or away from each other until the gauge to be changed is reached and thus the gauge is changed.

The gauge-changing wheelset of the present embodiment further includes a thrust rod 90. A central through hole through which the thrust rod 90 penetrates is provided along the axial direction of the axle 10. The thrust rod 90 has an end connected with the linkage mechanism and the other end extending to an outer end of the axle. By applying a thrust to the thrust rod 90, the wheels 30 are unlocked by driving the linkage mechanism through the thrust rod 90.

According to an embodiment, the linkage mechanism includes a locking slip ring 60, a thrust pin 80 and a locking elastic piece. In an embodiment, the locking slip ring 60 is slidably sleeved at the outer spline 11 of the axle, and the locking slip ring is provided therein with an inner spline 42 matched with the outer spline 11 of the axle, and provided externally with an outer spline matched with the inner spline 42 of the outer sleeve 40. An inner wall of the locking slip ring 60 is radially provided with a pair of open grooves having openings communicated with an end of the locking slip ring 60. The thrust pin 80 passes through the oblong hole 12 and both ends of the thrust pin 80 extend out of the oblong hole 12, and both ends of the thrust pin 80 exposed outside the oblong hole 12 are embedded inside the pair of the open grooves by the openings of the open grooves. The thrust pin 80 has a length consistent with a distance between the top walls of the pair of open grooves, and both ends of the thrust pin 80 abut against the top walls of the open groove. In addition, the thrust pin 80 has a width consistent with widths of the open grooves such that the thrust pin 80 and the locking slip ring 60 have reliable connection.

In order to facilitate the axial movement of the thrust pin 80 along the oblong hole 12, the thrust pin 80 has a width smaller than the length of the oblong hole 12, and a thickness less than or equal to the width of the oblong hole 12. In addition, the width of the locking slip ring 60 should not be too wide to ensure that the locking slip ring 60 can have an amount of movement in the space between the second raceway 41 of the outer sleeve 40 and the inner spline 42 of the outer sleeve 40. In addition, the oblong hole 12 should have a length lightly smaller than the length of the outer spline 11 of the axle, so that the locking slip ring 60 always moves on the outer spline 11 of the axle.

The locking elastic piece, for example, an elastic spring 70, is sleeved on the axle, and has an end abutted against an outer wall, i.e., a stop end surface of the first raceway 13, and the other end abutted against an end of the locking slip ring 60 away from the open groove. When the locking elastic piece is in a natural state, the outer spline 42 outside the locking slip ring 60 is at least partially located in the inner spline 42 of a corresponding side of the outer sleeve 40 to lock the rotation of the outer sleeve 40 for fixing the outer sleeve relative to the axle 10. In this case, the wheels and the axle sleeve 20 as well as the outer sleeve 40 and the axle 10 are integrated and have no rotation relative to each other, and the wheels 30 are in a locked state.

Specifically, an end of the thrust rod 90 penetrates into the central through hole 15 of the axle 10 and abuts against a side of the thrust pin 80 where the open groove is located, and the other end of the thrust rod 90 extends to the end of the axle 10. By applying a thrust to the thrust rod 90, the thrust rod 90 pushes the locking slip ring 60 to compress the locking elastic element and disengage from the inner splines 42 of the outer sleeve 40 to unlock the rotation of the outer sleeve 40 relative to the axle 10.

In the present embodiment, the first non-self-locking thread 21 is a trapezoidal thread, and correspondingly, the second non-self-locking thread 14 is a trapezoidal thread matching the trapezoidal thread having reliable performance.

It should be noted that the locking elastic piece may also be other elastic sleeves with certain elasticity.

According to an embodiment of the present application, an inner circumference of the outer sleeve 40 is provided with an annular boss at the second raceway 41 and the second raceway 41 is formed on the annular boss. After the outer sleeve 40 and the axle 10 are connected by a rolling ball, a pair of mounting spaces for the axle sleeves 20 are formed between the outer sleeve 40 and the axle 10 at both axial sides of the rolling space. During the sliding process, the sliding bearing 110 is in sliding contact with the axle 10 and is inserted into the outer sleeve 40 from the mounting space; the outer spline 22 of the axle sleeve move axially relative to the inner spline 42 of the outer sleeve 40 until the first non-self-locking thread 21 of the axle 20 is in contact with the second non-self-locking thread 14 of the axle 10, then the axle sleeve 20 is rotated such that the first non-self-locking thread 21 is screwed into the second non-self-locking thread 14.

According to an embodiment of the present application, an annular flange is formed at a position of the axle 10 where the first raceway 13 is constructed. The annular flange has an outer diameter larger than the outer diameter of the remaining part of the axle 10 such that a stop end surface is formed at both axial ends of the annular flange so as to define a limit position at which the axle sleeve 20 stops moving.

For a gauge-changing wheelset for motor vehicle, a gearbox 120 is mounted outside the outer sleeve 40, and for a gauge-changing wheelset for trailer, a plurality of brake discs 130 are mounted outside the outer sleeve 40.

In order to improve the reliability of the connection between the outer sleeve 40 and the axle 10, according to an embodiment of the present application, there are two first raceways 13 arranged side by side. Correspondingly, there are two second raceways 41, thus forming two raceway spaces arranged side by side.

Further, the axle 10 is divided into a main half shaft and an auxiliary half shaft by each first raceway 13, and the part of the axle 10 provided with the outer splines and the oblong hole 12 is the main half shaft. The locking slip ring 60 is mounted on the main half shaft, and the open groove of the locking slip ring 60 faces towards the free end of the main half shaft, and the locking spring 70 is mounted between the stop end surface of the annular flange and the locking slip ring 60.

For optimizing the structure, the first raceway 13 is disposed close to the outer spline 11 of the axle 10.

According to an embodiment of the present application, a distance between the outer splines 11 of the axle and the adjacent second non-self-locking threads 14 is equal to a distance between the annular flange and the adjacent second non-self-locking threads 14, and both of them are equal to half of the gauge to be changed, and the distance serves as a movement space of the first non-self-locking thread 21 of the axle sleeve 20.

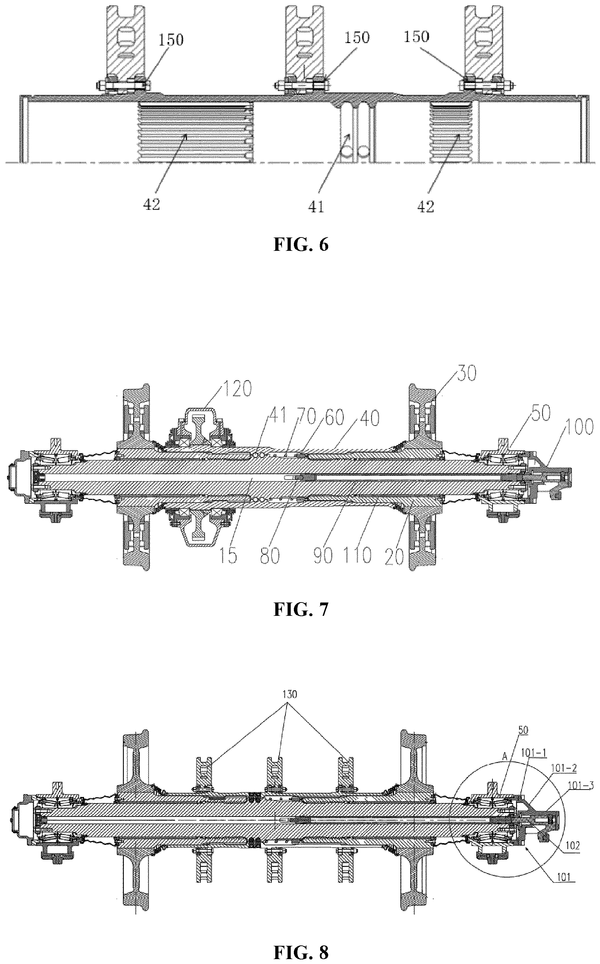

As shown in FIG. 5, for the gauge-changing wheelset for motor vehicle, the outer sleeve 40 is constructed with a gearbox mounting base 140 for mounting the gearbox 120; as shown in FIG. 6, for the gauge-changing wheelset for trailer, the outer sleeve 40 is constructed with a brake disc mounting interface 150 and there are a plurality of the brake disc mounting interfaces 150 arranged at intervals for mounting a plurality of brake discs 130 arranged at intervals.

Specifically, both ends of the axle 10 located outside the pair of wheels 30 are respectively mounted with axle-box bodies 50.

According to an embodiment of the present application, both axial ends of the axle 10 are configured as stepped shafts with diameters at both ends smaller than the middle diameter, so that both ends of the stepped shaft are used to mount the axle-box body 50.

According to an embodiment of the present application, sliding sections are respectively formed on the intermediate shaft of the stepped shaft between each section of the second non-self-locking thread 14 and the shaft end of the intermediate shaft, so that the sliding bearings 110 of the axle sleeve 20 slides relative to the axle 10.

In addition, the central through hole 15 provided on the axle 10 is beneficial to reduce the weight of the axle 10.

According to an embodiment of the present application, the gauge-changing wheelset further includes a thrust converting mechanism 100 capable of directly applying thrust on the thrust rod 90 by means of an external force during changing gauge, and the thrust converting mechanism 100 is mounted an end of the axle 10 where the thrust rod 90 is located, that is, the thrust converting mechanism 100 only needs to be mounted on an end of the axle 10.

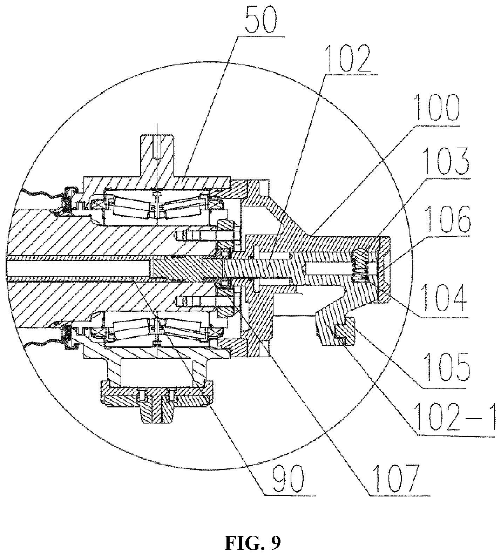

Specifically, as shown in FIGS. 8 and 9, the thrust converting mechanism 100 includes a mounting base 101 and a jacking shaft 102 axially penetrating through the mounting base 101, the mounting base 101 is fixedly mounted outside the axle-box body 50, and the jacking shaft 102 is connected to the thrust rod 90. When the track side wall of the ground gauge-changing facility applies an axial thrust to the jacking shaft 102, the jacking shaft 102 pushes the thrust rod 90 to move to unlock the wheel 30.

Specifically, the mounting base 101 is provided with a horizontal through hole along the axial direction of the axle-box body 50; the jacking shaft 102 penetrates movably through the horizontal through hole, and is opposite to the end of the thrust rod 90 located at the outer end of the axle 10. An open slot is formed in one of the jacking shaft 102 and the mounting base 101 at an opposite position of the jacking shaft 102. That is, the open slot may be provided on the radial outer wall of the jacking shaft 102 or may be provided on the corresponding inner wall of the mounting base 101.

The open slot has an axis perpendicular to the axis of the horizontal through hole. A positioning piece is mounted in the open slot and connected with the open slot by an elastic preloaded piece such that it has an amount of movement along the axis of the open slot; the other one of the jacking shaft 102 and the mounting base 101 is provided with a positioning recess. That is, when the jacking shaft 102 is provided with the open slot, the mounting base 101 is provided with a positioning recess, while when the mounting base 101 is provided with the open slot, the jacking shaft 102 is provided with a positioning recess.

Further, a positioning end of the positioning piece is matched with the positioning recess. For example, when the positioning end of the positioning piece is a spherical surface, the positioning recess has a matching spherical surface, and the two spherical surfaces are compatible.

When the positioning end of the positioning piece is located in the positioning recess, the jacking shaft 102 is in a locked state, and when the positioning end of the positioning piece disengages from the positioning recess due to the jacking shaft 102 being subjected to a lateral thrust, the jacking shaft 102 is in a movable state. Specifically, the lateral thrust acts on the positioning end of the positioning piece, thereby generating a vertical component force, compressing the elastic preloaded piece so that the positioning piece is retracted into the open slot, and the lateral positioning of the jacking shaft 102 is released. In this case, the jacking shaft 102 is in the movable state, and continues to push the jacking shaft 102, which may push the thrust rod 90.

After the axle-box body 50 is lifted by an unlocking rail to unload the wheel 30, a thrust is applied to the thrust rod 90 through the jacking shaft 102, the thrust rod 90 pushes the thrust pin 80 to drive the locking slip ring 60 to compress the locking elastic piece on the axle 10 and move away from the inner splines 42 of the outer sleeve 40 to disengage the inner splines 42 of the outer sleeve 40, thereby unlocking the rotational degree of freedom of the outer sleeve 40. In this case, when the wheels 30 are pushed, since the axle sleeve 20 is connected with the axle 10 through the non-self-locking thread pair, the outer sleeve 40, the wheel 30 and the axle sleeve 20 will rotate together around the axle 10, the first non-self-locking thread 21 of the axle sleeve 20 moves along the second non-self-locking thread 14 of the axle 10 during the rotation, so that the wheel 30 moves along with the axle sleeve 20 during the rotation until the gauge is changed.

After the gauge is changed, the ground gauge-changing facility will no longer apply thrust on the jacking shaft 102, that is, the thrust of the thrust rod 90 on the thrust pin 80 is removed in this case, and the thrust pin 80 will follow the locking slip ring 60 to return to its original position under the elastic reset action of the locking elastic piece, that is, the outer splines of the locking slip ring 60 are re-inserted into the outer splines 22 of the outer sleeve 40 to lock the rotational degree of freedom of the outer sleeve 40. In this case, the axle sleeve 20 and the outer sleeve 40 cannot rotate relative to the axle 10, the axle sleeve 20 and the outer sleeve 40 can only rotate together with the axle 10, that is, the axle sleeve 20 and the outer sleeve 40 are locked on the axle 10, and the wheel 30 is re-locked.

In order to ensure the stability of the jacking shaft 102 when being pushed, a jacking shaft support ring 107 is fixed at the end of the axle 10, and is coaxial with the central through hole 15. The jacking shaft support ring 107 partially extends into the central through hole 15, so that the jacking shaft support ring 107 can be mounted reliably. The jacking shaft support ring 107 has an inner diameter matching the outer diameter of the jacking shaft 102 so as to ensure that the jacking shaft 102 does not shake during the movement process, the jacking shaft 102 enters the central through hole 15 through the jacking shaft support ring 107 and pushes the thrust rod 90, and the movement process is smooth.

The gauge-changing wheelset according to the embodiment has convenient and reliable gauge-changing operation, and simple overall structure.

Further, as shown in FIG. 8, the mounting base 101 includes a base body 101-1 and an extending base 101-3 extending to a side along the base body 101-1, and the base body 101-1 and the extending base 101-3 are connected by a frustum-shaped transition connecting base 101-2 having a large end connected with the base body 101-1 and a small end connected with the extending base 101-3, which can form a reasonable avoidance and match with the ground gauge-changing facility.

Further, a periphery of the base body is provided with connecting holes and the base body 101-1 is mounted on the outer end of the axle-box body 50 by allowing the connecting pieces to pass through the connecting holes. The horizontal through hole penetrates through the extending base 101-3, the transition connecting base 101-2 and the base body 101-1. Specifically, the extending base 101-3, the transition connecting base 101-2 and the base body 101-1 are integrally formed, which is convenient for processing and leads to high strength. The mounting base 101 of the present embodiment is directly mounted on the outer end of the axle-box body 50, and can additionally function as the outer end cover of the axle-box body 50. The base body -101-1 has a shape matching the shape of the outer end of the axle-box body 50, for example, can be in a square shape and rounded arcs around the square.

In the present embodiment, the base body 101-1 is plate-shaped, and the extending base 101-3 is cylinder-shaped. The lower side of the extending base 101-3 is provided with a notch penetrating through the end thereof, and the notch can be formed by cutting a side wall corresponding to a sub-arc along the axial direction from the end of the extending base 101-3; the specific cutting length is set based on the length of the desired changing gauge.

An outer end of the jacking shaft 102 is flush with an outer end of the extending base 101-3 when the positioning end of the positioning piece is located in the positioning recess; that is, the jacking shaft 102 is movable in the mounting base 101, specifically the extending base 101-3. The outer end of the jacking shaft 102 is flush with the outer end of the extending base 101-3 during no movement occurs and the jacking shaft 102 moves into the extending base 101-3 along the notch during movement.

Specifically, the jacking portion 102-1 may be subjected to a lateral thrust until the positioning end of the positioning piece disengages from the positioning recess and move along the notch, and the specific movable length is equal to the length of the notch.

According to an embodiment of the present application, as shown in FIGS. 8 to 9, the outer end of the extending base 101-3 is provided with a jacking gland 106 for limiting the position of the jacking shaft 102 to avoid the jacking shaft 102 to extend out of the outer end of the extending base 101-3.

The outer end of the jacking shaft 102 is provided with a connecting portion extending downward and inclined toward a direction away from the jacking gland 106, the jacking portion 102-1 is formed at a free end of the connecting portion, and is provided with a vertical flat surface. By arranging the jacking portion 102-1 at the lower end of the jacking shaft 102, it is convenient to push the jacking shaft 102 from the bottom of the jacking shaft 102, which on one hand, may reasonably avoid the jacking gland 106, and on the other hand, may adapt to the height of the track side wall of the ground gauge-changing facility.

According to an embodiment of the present application, a friction block 105 is mounted on the vertical flat surface of the jacking portion 102-1. By arranging the friction block 105, on one hand, the strength of the jacking portion 102-1 is increased, and on the other hand, the service life of the jacking portion 102-1 is prolonged. In addition, when the friction block 105 is worn out, it may be directly replaced without replacing the jacking portion 102-1 and mounting base 101, which saves costs.

According to an embodiment of the present application, the positioning piece is a positioning pin 103 having a positioning end configured to have a convex arc surface, such as a convex spherical surface, and the positioning recess is configured to have a concave arc surface matched with the convex arc surface, such as a concave spherical surface. A part of the convex arc surface is located in the concave arc surface such that the positioning end can be retracted from the positioning recess in time when it is subjected to a lateral thrust. It should be noted that, when the positioning pin 103 is subjected to a lateral thrust, its convex arc surface is subjected to a vertical thrust force component and a lateral thrust force component, and the vertical thrust force component compresses the elastic preloaded piece so that the positioning pin 103 moves downward, and the lateral thrust component pushes the positioning pin 103 away from the positioning recess.

According to an embodiment of the present application, the elastic preloaded piece is a preloaded spring 104 having an end fastened in the open slot, and the other end fastened and sleeved on an end of the positioning pin 103 distal to the positioning end. The positioning pin 103 may be provided with a connecting end with a diameter smaller than that of the positioning end. A positioning step is formed at the connection between the connecting end and the positioning end, and the preloaded spring 104 is directly sleeved on the connecting end and abuts against the positioning step.

According to the present embodiment, the gauge-changing process is described as follows.
1. unlocking stage: the axle-box body 50 is gradually lifted by an unlocking rail, so that the wheel 30 is unloaded. After the thrust converting mechanism 100 is triggered, the jacking shaft 102 is pushed inward to contact the thrust rod 90, and the thrust pin 80 and the locking slip ring 60 are pushed to move inward and compress the locking spring 70 until the locking slip ring 60 is out of contact with the inner splines 42 of the outer sleeve 40, and the rotational constraint between the axle 10 and the axle sleeve 20 is released.
2. gauge-changing stage: after entering the gauge-changing stage, the wheels 30 move inward (or outward) under the action of the gauge-changing lateral force, and the wheels 30 and the axle sleeve 20 rotate together around the non-self-locking thread pair to reach a target gauge.
3. locking stage: after entering the locking section, the unlocking rail gradually lowers and no longer plays the supporting role, and the locking slip ring 60 moves outward under the thrust of the locking spring 70 and is inserted into the inner spline 42 of the outer sleeve 40 to be re-locked. The jacking shaft 102 recovers under the action of the restoring force of the locking spring 70 and is out of contact with the thrust rod 90, the gauge-changing process ends, the wheelset is completely locked, and the normal operation state is re-entered.

A railway vehicle according to an embodiment of the present application includes a vehicle body and a bogie arranged under the vehicle body, and each bogie is provided with a pair of gauge-changing wheelsets. By arranging the gauge-changing wheelsets on each bogie, the railway vehicle may drive on rails having different gauges.

The implementations above are only used to illustrate the present application, but not to limit the present application. Although the present application has been described in detail with reference to the embodiments, those skilled in the art should understand that various combinations, modifications, or equivalent replacements of the technical solutions of the present application do not depart from the scope of the technical solutions of the present application provided they are covered by the claims of the present application.

## Claims

1. A gauge-changing wheelset, comprising an axle (10), a pair of wheels, further comprising a pair of axle sleeves (20), an outer sleeve (40) and a linkage mechanism (60, 70, 80),
wherein an outer circumference of a first end of each axle sleeve is provided with a wheel mounting base (24), an outer circumference of a second end of each axle sleeve (20) is provided with a section of an outer spline (22) extending along an axial direction of the axle sleeve, an inner circumference of the second end of each axle sleeve is provided with a section of a first non-self-locking thread (21), a pair of the first non-self-locking threads of the pair of axle sleeves have opposite directions of rotation, and the pair of wheels are fastened on the wheel mounting bases (24) of the pair of axle sleeves;
the axle is provided with two sections of second non-self-locking threads (14) at intervals, each second non-self-locking thread forming a non-self-locking thread pair with the first non-self-locking thread (21); the wheels are mounted on the axle through the axle sleeves (20), the first non-self-locking thread is fitted and connected with the second non-self-locking thread, and a part of the axle between the pair of second non-self-locking threads is provided with at least one first raceway (13) circumferentially disposed around the axle;
the outer sleeve (40) is sleeved outside the axle, an inner circumference of the outer sleeve is provided with a second raceway (41) corresponding to and being snap-fitted with the first raceway to form a rolling space in which a rolling element matched therewith is mounted such that the outer sleeve is rotatably connected outside the axle, and an inner spline (42) matched with the outer spline (22) on the axle sleeve (20) is provided on both axial sides of the second raceway (41) inside the outer sleeve (40) and located at a predetermined distance from the second raceway; and
the linkage mechanism is mounted between the axle and the outer sleeve (40) for locking or unlocking rotation of the outer sleeve relative to the axle; and when the rotation of the outer sleeve relative to the axle is unlocked by the linkage mechanism and the wheels are in an unloaded state, the pair of wheels are pushed to rotate synchronously to move closer to each other or away from each other, so as to change the gauge.

2. The gauge-changing wheelset of claim 1, wherein an outer circumference of the axle close to a middle portion thereof is provided with a section of outer spline (11) extending in an axial direction of the axle, and the outer spline of the axle is provided with an oblong hole (12) radially extending through the outer spline and having a longitudinal direction coinciding with the axial direction of the axle.

3. The gauge-changing wheelset of claim 2, wherein the linkage mechanism comprises a locking slip ring (60), a thrust pin (80) and a locking elastic piece (70);
the locking slip ring is slidably sleeved at the outer spline of the axle, and the locking slip ring is provided therein with an inner spline matched with the outer spline of the axle, and provided externally with an outer spline matched with the inner spline of the outer sleeve; an inner wall of the locking slip ring is radially provided with a pair of open grooves having openings communicated with an end of the locking slip ring; the thrust pin passes through the oblong hole, and both ends of the thrust pin extend out of the oblong hole and both ends of the thrust pin exposed outside the oblong hole are embedded inside the pair of the open grooves by the openings of the open grooves; the locking elastic piece is sleeved on the axle, and has an end abutted against an outer wall of the first raceway, and another end abutted against an end of the locking slip ring away from the open groove; and when the locking elastic piece is in a natural state, the outer spline outside the locking slip ring is at least partially located in the inner spline of a corresponding side of the outer sleeve to lock the rotation of the outer sleeve.

4. The gauge-changing wheelset of claim 3, wherein the gauge-changing wheelset further comprises a thrust rod (90) penetrating through a central through hole provided along the axial direction of the axle, an end of the thrust rod penetrates through the central through hole (15) of the axle and abuts against a side of the thrust pin (80) at which the open groove is located, and another end of the thrust rod extends to an end portion of the axle; the thrust rod pushes the locking slip ring (60) to compress the locking elastic piece (70) and disengage from the inner spline of the outer sleeve by applying thrust to the thrust rod, so as to unlock the rotation of the outer sleeve relative to the axle.

5. The gauge-changing wheelset of claim 3, wherein
the first non-self-locking thread (21) has a length greater than the length of the second non-self-locking thread (14) and equal to half of the gauge to be changed;
an inner circumference of the outer sleeve is provided with an annular boss at the second raceway, and after the outer sleeve is connected to the axle, a pair of mounting spaces for the axle sleeves are formed between the outer sleeve and the axle at both axial sides of the rolling space;
the second raceway is provided with a rolling element mounting hole through which the rolling element is mounted in the rolling space; and
the locking elastic piece (70) is a locking spring.

6. The gauge-changing wheelset of claim 4, further comprising a thrust converting mechanism (100), and axle-box bodies mounted at both ends of the axle and outside the wheels;
the thrust converting mechanism comprises a mounting base (101) and a jacking shaft (102), wherein the mounting base is mounted on an outer end of the axle-box body close to an end of the thrust rod (90), and is provided with a horizontal through hole along the axial direction of each axle-box body;
the jacking shaft is movably inserted in the horizontal through hole and is opposite to the thrust rod, and an open slot is provided in one of the jacking shaft and the mounting base at an opposite position of the jacking shaft to the mounting base and has an axis perpendicular to the axis of the horizontal through hole; a positioning piece is mounted in the open slot and connected with the open slot by an elastic preloaded piece; the other one of the jacking shaft and the mounting base is provided with a positioning recess matched with a positioning end of the positioning piece; and
the positioning end of the positioning piece is located in the positioning recess and when the jacking shaft is in a locked state, the jacking shaft is pushed so that the positioning end of the positioning piece disengages from the positioning recess, to allow the jacking shaft to be in a movable state to push the thrust rod.

7. The gauge-changing wheelset of claim 6, wherein the mounting base comprises a base body (101-1) and an extending base (101-3) extending to a side along the base body, and the base body and the extending base are connected to each other by a frustum-shaped transition connecting base (101-2) having a large end connected with the base body and a small end connected with the extending base, and a periphery of the base body is provided with connecting holes and the horizontal through hole penetrates through the extending base, the transition connecting base and the base body.

8. The gauge-changing wheelset of claim 7, wherein a lower side of the extending base is provided with a notch penetrating through an end thereof;
a jacking portion (102-1) extends downward from an outer end of the jacking shaft, and the outer end of the jacking shaft is flush with an outer end of the extending base when the positioning end of the positioning piece is located in the positioning recess; and
when the jacking portion is pushed, the positioning end of the positioning piece disengages from the positioning recess and moves along the notch.

9. The gauge-changing wheelset of claim 8, wherein the outer end of the extending base is provided with a jacking gland (106);
the outer end of the jacking shaft is provided with a connecting portion extending downward and inclined toward a direction away from the jacking gland, and the jacking portion is formed at a free end of the connecting portion, and is provided with a vertical flat surface; and
a friction block is mounted on the vertical flat surface of the jacking portion.

10. The gauge-changing wheelset of any one of claims 6 to 9, wherein the positioning piece is a positioning pin (103) having a positioning end configured to have a convex arc surface, and the positioning recess is configured to have a concave arc surface matched with the convex arc surface; and a part of the convex arc surface is located in the concave arc surface; and
the elastic preloaded piece is a preloaded spring having an end fastened in the open slot, and the other end fastened and sleeved on an end of the positioning pin distal to the positioning end.

11. The gauge-changing wheelset of any one of claims 6 to 9, wherein a jacking shaft support ring is fixed at the end of the axle and is disposed coaxially with the central through hole (15); the jacking shaft support ring partially extends inside the central through hole and has an inner diameter matched with an outer diameter of the jacking shaft; and the jacking shaft enters the central through hole through the jacking shaft support ring and is configured to push the thrust rod.

12. A railway vehicle, comprising a vehicle body and a bogie arranged under the vehicle body, wherein each bogie is provided with a pair of gauge-changing wheelsets according to any one of claims 1 to 11.

## Patentansprüche

1. Ein Radsatz mit veränderlicher Spurweite, umfassend eine Achse (10), ein Paar Räder, weiterhin umfassend ein Paar Achsmanschetten (20), eine Außenmanschette (40) und einen Verbindungsmechanismus (60, 70, 80),
wobei ein Außenumfang eines ersten Endes jeder Achsmanschette mit einer Radbefestigungsbasis (24) versehen ist, ein Außenumfang eines zweiten Endes jeder Achsmansachette (20) mit einem Abschnitt einer Außenverzahnung (22) versehen ist, die sich entlang einer axialen Richtung der Achsmanschette erstreckt, ein Innenumfang des zweiten Endes jeder Achsmanschette mit einem Abschnitt eines ersten nicht-selbsthemmenden Gewindes (21) versehen ist, ein Paar der ersten nicht-selbsthemmenden Gewinde des Paares von Achsmanschetten entgegengesetzte Drehrichtungen haben und das Paar von Rädern an den Radbefestigungsbasen (24) des Paares von Achsmanschetten befestigt ist;
die Achse mit zwei Abschnitten von zweiten nicht-selbsthemmenden Gewinden (14) in Abständen versehen ist, wobei jedes zweite nicht-selbsthemmende Gewinde ein nichtselbsthemmendes Gewindepaar mit dem ersten nicht-selbsthemmenden Gewinde (21) bildet; die Räder auf der Achse durch die Achsmanschetten (20) montiert sind, das erste nicht-selbsthemmende Gewinde mit dem zweiten nicht-selbsthemmenden Gewinde eingepasst und verbunden ist und ein Teil der Achse zwischen dem Paar von zweiten nicht-selbsthemmenden Gewinden mit mindestens einer ersten Laufbahn (13) versehen ist, die in Umfangsrichtung um die Achse angeordnet ist;
die Außenmanschette (40) außerhalb der Achse mit einer Manschette versehen ist, ein innerer Umfang der Außenmanschette mit einer zweiten Laufbahn (41) versehen ist, die der ersten Laufbahn entspricht und mit dieser verrastet ist, um einen Rollraum zu bilden, in dem ein dazu passendes Rollelement montiert ist, so dass die Außenmanschette außerhalb der Achse drehbar verbunden ist, und eine Innenverzahnung (42), die zu der Außenverzahnung (22) auf der Achsmanschette (20) passt, auf beiden axialen Seiten der zweiten Laufbahn (41) innerhalb der Außenmanschette (40) vorgesehen ist und in einem vorbestimmten Abstand von der zweiten Laufbahn angeordnet ist; und
der Verbindungsmechanismus zwischen der Achse und der Außenmanschette (40) angebracht ist, um die Drehung der Außenmanschette relativ zur Achse zu sperren oder zu entsperren; und wenn die Drehung der Außenmanschette relativ zur Achse durch den Verbindungsmechanismus entsperrt wird und die Räder sich in einem unbelasteten Zustand befinden, wird das Räderpaar forciert, sich synchron zu drehen, um sich aufeinander zu oder voneinander weg zu bewegen, um so die Spurweite zu verändern.

2. Radsatz mit veränderlicher Spurweite gemäß Anspruch 1, wobei ein äußerer Umfang der Achse in der Nähe eines mittleren Abschnitts derselben mit einem Abschnitt einer Außenverzahnung (11) versehen ist, die sich in einer axialen Richtung der Achse erstreckt, und die Außenverzahnung der Achse mit einem Langloch (12) versehen ist, das sich radial durch die Außenverzahnung erstreckt und eine Längsrichtung aufweist, die mit der axialen Richtung der Achse zusammenfällt.

3. Radsatz mit veränderlicher Spurweite gemäß Anspruch 2, wobei der Verbindungsmechanismus einen Sperr-Schleifring (60), einen Schubstift (80) und ein elastisches Sperrteil (70) umfasst;
der Sperr-Schleifring gleitend an der Außenverzahnung der Achse angebracht ist und der Sperr-Schleifring darin mit einer Innenverzahnung versehen ist, die an die Außenverzahnung der Achse angepasst ist, und außen mit einer Außenverzahnung versehen ist, die an die Innenverzahnung der Außenmanschette angepasst ist; eine Innenwand des Sperr-Schleifrings ist radial mit einem Paar offener Nuten versehen, die Öffnungen aufweisen, die mit einem Ende des Sperr-Schleifrings in Verbindung stehen; der Druckstift durchgreift das Langloch, und beide Enden des Druckstifts erstrecken sich aus dem Langloch heraus, und beide Enden des Druckstifts, die außerhalb des Langlochs frei liegen, sind in das Paar der offenen Nuten durch die Öffnungen der offenen Nuten eingebettet; das elastische Sperrteil ist auf der Achse gelagert und hat ein Ende, das gegen eine äußere Wand der ersten Laufbahn, und ein anderes Ende, das gegen ein Ende des Sperr-Schleifrings weg von der offenen Nut stößt; und wenn das elastische Sperrteil in einem Ausgangszustand ist, befindet sich die äußere Keilnut außerhalb des Sperr-Schleifrings zumindest teilweise in der inneren Keilnut einer entsprechenden Seite der Außenmanschette, um die Drehung der Außenmanschette zu sperren.

4. Radsatz mit veränderlicher Spurweite gemäß Anspruch 3, wobei der Radsatz mit veränderlicher Spurweite weiterhin eine Schubstange (90) umfasst, die durch eine zentrales Durchgangsbohrung (15) hindurchgeht, das entlang der axialen Richtung der Achse vorgesehen ist, wobei ein Ende der Schubstange durch das zentrale Durchgangsloch der Achse hindurchgeht und an einer Seite des Schubstifts (80) anstößt, an der sich die offene Nut befindet, und ein anderes Ende der Schubstange sich zu einem Endabschnitt der Achse erstreckt; die Schubstange den Sperr-Schleifring (60) schiebt, um das elastische Sperrteil (70) zusammenzudrücken und von der Innenverzahnung der Außenmanschette zu lösen, indem Schub auf die Schubstange ausgeübt wird, um die Drehung der Außenmanschette relativ zur Achse zu entsperren.

5. Radsatz mit veränderlicher Spurweite gemäß Anspruch 3, wobei
das erste nicht-selbsthemmende Gewinde (21) eine Länge aufweist, die größer als die Länge des zweiten nicht-selbsthemmenden Gewindes (14) und gleich der Hälfte der zu wechselnden Spurweite ist;
ein innerer Umfang der Außenmanschette mit einem ringförmigen Vorsprung an der zweiten Laufbahn versehen ist und, nachdem die Außenmanschette mit der Achse verbunden ist, ein Paar von Befestigungsräumen für die Achsmanschetten zwischen der Außenmanschette und der Achse an beiden axialen Seiten des Rollraumes ausgebildet sind;
die zweite Laufbahn mit einer Rollkörperbefestigungsöffnung versehen ist, durch die der Rollkörper in dem Rollraum befestigt wird; und
das elastische Sperrteil (70) eine Sperrfeder ist.

6. Radsatz mit veränderlicher Spurweite gemäß Anspruch 4, der weiterhin einen Schubumwandlungsmechanismus (100) und Achslagerkörper umfasst, die an beiden Enden der Achse und außerhalb der Räder angebracht sind;
der Schubumwandlungsmechanismus eine Montagebasis (101) und eine Vortriebswelle (102) umfasst, wobei die Montagebasis an einem äußeren Ende des Achslagerkörpers in der Nähe eines Endes der Schubstange (90) montiert ist und mit einem horizontalen Durchgangsloch entlang der axialen Richtung jedes Achslagerkörpers versehen ist;
die Vortriebswelle beweglich in das horizontale Durchgangsloch eingesetzt ist und der Schubstange gegenüberliegt, und ein offener Schlitz entweder in der Vortriebswelle oder in der Montagebasis an einer der Montagebasis gegenüberliegenden Position der Vortriebswelle vorgesehen ist und eine Achse senkrecht zur Achse des horizontalen Durchgangslochs aufweist; ein Positionierstück in dem offenen Schlitz montiert und mit dem offenen Schlitz durch ein elastisches vorgespanntes Stück verbunden ist; die andere Vortriebswelle und die Montagebasis mit einer Positionieraussparung versehen ist, die mit einem Positionierende des Positionierstücks zusammenpasst; und
das Positionierende des Positionierstücks in der Positionieraussparung angeordnet ist und, wenn sich die Vortriebswelle in einem gesperrten Zustand befindet, die Vortriebswelle so geschoben wird, dass sich das Positionierende des Positionierstücks aus der Positionieraussparung löst, um zu ermöglichen, dass sich die Vortriebswelle in einem beweglichen Zustand befindet, um die Schubstange zu schieben.

7. Radsatz mit veränderlicher Spurweite gemäß Anspruch 6, wobei die Montagebasis einen Basiskörper (101-1) und eine sich zu einer Seite entlang des Basiskörpers erstreckende Verlängerungsbasis (101-3) umfasst, und der Basiskörper und die Verlängerungsbasis miteinander durch eine kegelstumpfförmige Übergangsverbindungsbasis (101-2) verbunden sind, die ein mit dem Basiskörper verbundenes großes Ende und ein mit der Verlängerungsbasis verbundenes kleines Ende aufweist, und ein Umfang des Basiskörpers mit Verbindungslöchern versehen ist und das horizontale Durchgangsloch die Verlängerungsbasis, die Übergangsverbindungsbasis und den Basiskörper durchdringt.

8. Radsatz mit veränderlicher Spurweite gemäß Anspruch 7, wobei eine untere Seite der Verlängerungsbasis mit einer Einkerbung versehen ist, die ein Ende davon durchdringt;
ein Vortriebsabschnitt (102-1) sich von einem äußeren Ende der Vortriebswelle nach unten erstreckt und das äußere Ende der Vortriebswelle mit einem äußeren Ende der Verlängerungsbasis bündig ist, wenn sich das Positionierende des Positionierstücks in der Positionieraussparung befindet; und
wenn der Vortriebsabschnitt geschoben wird, sich das Positionierende des Positionierstücks aus der Positionieraussparung löst und sich entlang der Einkerbung bewegt.

9. Radsatz mit veränderlicher Spurweite gemäß Anspruch 8, wobei das äußere Ende der Verlängerungsbasis mit einer Vortriebsstopfbuchse (106) versehen ist;
das äußere Ende der Vortriebswelle mit einem Verbindungsabschnitt versehen ist, der sich nach unten erstreckt und in einer Richtung weg von der Vortriebsstopfbuchse geneigt ist, und der Vortriebsabschnitt an einem freien Ende des Verbindungsabschnitts ausgebildet und mit einer vertikalen flachen Oberfläche versehen ist; und
ein Reibungsblock an der vertikalen flachen Oberfläche des Vortriebsabschnitts angebracht ist.

10. Radsatz mit veränderlicher Spurweite gemäß einem der Ansprüche 6 bis 9, wobei das Positionierstück ein Positionierstift (103) mit einem Positionier-ende ist, das so konfiguriert ist, dass es eine konvexe Bogenfläche aufweist, und die Positionieraussparung so konfiguriert ist, dass sie eine konkave Bogenfläche aufweist, die an die konvexe Bogenfläche angepasst ist; und ein Teil der konvexen Bogenfläche in der konkaven Bogenfläche angeordnet ist; und
das elastische vorgespannte Teil eine vorgespannte Feder ist, die ein Ende hat, das in dem offenen Schlitz befestigt ist, und das andere Ende, das an einem Ende des Positionierstifts distal zu dem Positionierende befestigt und ummantelt ist.

11. Radsatz mit veränderlicher Spurweite gemäß einem der Ansprüche 6 bis 9, wobei ein Stützring für die Vortriebswelle am Ende der Achse befestigt ist und koaxial zu der zentralen Durchgangsbohrung (15) angeordnet ist; der Stützring für die Vortriebswelle sich teilweise in die zentrale Durchgangsbohrung hinein erstreckt und einen Innendurchmesser aufweist, der an einen Außendurchmesser der Vortriebswelle angepasst ist; und die Vortriebswelle durch den Stützring für die Vortriebswelle in die zentrale Durchgangsbohrung eintritt und so konfiguriert ist, dass sie die Schubstange schiebt.

12. Schienenfahrzeug, umfassend einen Wagenkasten und ein unter dem Wagenkasten angeordnetes Drehgestell, wobei jedes Drehgestell mit einem Paar Radsätzen mit veränderlicher Spurweite gemäß einem der Ansprüche 1 bis 11 versehen ist.

## Revendications

1. Essieu monté à jauge variable, comprenant un essieu (10), une paire de roues, comprenant en outre une paire de manchons (20) d'essieu, un manchon extérieur (40) et un mécanisme de liaison (60, 70, 80),
dans lequel une circonférence extérieure d'une première extrémité de chaque manchon (20) d'essieu est pourvue d'une base (24) de montage de roue, une circonférence extérieure d'une deuxième extrémité de chaque manchon d'essieu est pourvue d'une section d'une cannelure (22) extérieure s'étendant le long d'une direction axiale du manchon d'essieu, une circonférence intérieure de la deuxième extrémité de chaque manchon d'essieu est pourvue d'une section d'un premier filetage (21) non autobloquant, une paire de premiers filetages non autobloquants de la paire de manchons d'essieu ont des directions de rotation opposées, et la paire de roues est fixée sur les bases (24) de montage de roue de la paire de manchons d'essieu ;
l'essieu est pourvu de deux sections de seconds filetages (14) non autobloquants à intervalles, chaque second filetage non autobloquant formant une paire de filetages non autobloquants avec le premier filetage (21) non autobloquant ; les roues sont agencées sur l'essieu à travers les manchons d'essieu, le premier filetage non autobloquant est ajusté et relié au second filetage non autobloquant, et une partie de l'essieu entre la paire de seconds filets non autobloquants est pourvue d'au moins une première zone de roulement (13) disposée de manière circonférentielle autour de l'essieu ;
le manchon extérieur (40) est manchonné à l'extérieur de l'essieu, une circonférence intérieure du manchon extérieur est pourvue d'une second zone de roulement (41) correspondant à la première zone de roulement et s'emboîtant avec celle-ci pour former un espace de roulement dans lequel un élément de roulement adapté est agencé de sorte que le manchon extérieur est relié en rotation à l'extérieur de l'essieu, et une cannelure (42) intérieure adaptée à la cannelure (22) extérieure sur le manchon (20) d'essieu est pourvue sur les deux côtés axiaux de la seconde zone de roulement (41) à l'intérieur du manchon extérieur (40) et agencée à une distance prédéterminée de la seconde zone de roulement ; et
le mécanisme de liaison est agencé entre l'essieu et le manchon extérieur (40) pour verrouiller ou déverrouiller la rotation du manchon extérieur par rapport à l'essieu ; et lorsque la rotation du manchon extérieur par rapport à l'essieu est déverrouillée par le mécanisme de liaison et que les roues sont déchargées, la paire de roues est poussée pour tourner de manière synchronisée pour se rapprocher ou s'éloigner l'une de l'autre, de manière à varier la jauge.

2. Essieu monté à jauge variable selon la revendication 1, dans lequel une circonférence extérieure de l'essieu proche de sa partie centrale est pourvue d'une section de cannelure (11) extérieure s'étendant dans une direction axiale de l'essieu, et la cannelure extérieure de l'essieu est pourvue d'un trou (12) oblong s'étendant radialement à travers la cannelure extérieure et ayant une direction longitudinale coïncidant avec la direction axiale de l'essieu.

3. Essieu monté à jauge variable selon revendication 2, dans lequel le mécanisme de liaison comprend une bague (60) collectrice de verrouillage, une goupille (80) de poussée et une pièce (70) élastique de verrouillage ;
la bague collectrice de verrouillage est manchonnée de manière coulissante au niveau de la cannelure extérieure de l'essieu, et la bague collectrice de verrouillage est pourvue d'une cannelure intérieure correspondant à la cannelure extérieure de l'essieu, et pourvue à l'extérieur d'une cannelure extérieure correspondant à la cannelure intérieure du manchon extérieur ; une paroi intérieure de la bague collectrice de verrouillage est pourvue radialement d'une paire de rainures ouvertes dont les ouvertures communiquent avec une extrémité de la bague collectrice de verrouillage ; la goupille de poussée passe à travers le trou oblong, et les deux extrémités de la goupille de poussée sortent du trou oblong et les deux extrémités de la goupille de poussée exposées à l'extérieur du trou oblong sont encastrées à l'intérieur de la paire de rainures ouvertes par les ouvertures des rainures ouvertes ; la pièce élastique de verrouillage est manchonnée sur l'essieu, et a une extrémité étant jouxtée contre une paroi extérieure de la première zone de roulement, et une autre extrémité étant jouxtée contre une extrémité de la bague collectrice de verrouillage éloignée de la rainure ouverte ; et lorsque la pièce élastique de verrouillage est à l'état naturel, la cannelure extérieure à l'extérieur de la bague collectrice de verrouillage est au moins partiellement agencée dans la cannelure intérieure d'un côté correspondant du manchon extérieur pour bloquer la rotation du manchon extérieur.

4. Essieu monté à jauge variable selon revendication 3, dans lequel l'essieu monté à jauge variable comprend en outre une tige (90) de poussée pénétrant à travers un trou central traversant agencé le long de la direction axiale de l'essieu, une extrémité de la tige de poussée pénétrant à travers le trou (15) central traversant de l'essieu et jouxtant contre un côté de la goupille (80) de poussée sur lequel la rainure ouverte est agencée, et une autre extrémité de la tige de poussée s'étend jusqu'à une partie d'extrémité de l'essieu ; la tige de poussée pousse la bague (60) collectrice de verrouillage pour comprimer la pièce (70) élastique de verrouillage et pour se désengager de la cannelure intérieure du manchon extérieur en appliquant une poussée à la tige de poussée, de manière à débloquer la rotation du manchon extérieur par rapport à l'essieu.

5. Essieu monté à jauge variable selon revendication 3, dans lequel
le premier filetage (21) non autobloquant a une longueur supérieure à la longueur du second filetage (14) non autobloquant et égale à la moitié de la jauge à varier ;
une circonférence intérieure du manchon extérieur est pourvue d'une saillie annulaire au niveau de la seconde zone de roulement, et après que le manchon extérieur a été relié à l'essieu, une paire d'espaces de montage pour les manchons d'essieu est formée entre le manchon extérieur et l'essieu sur les deux côtés axiaux de l'espace de roulement ;
la seconde zone de roulement est pourvue d'un trou de montage traversant de l'élément roulant à travers lequel l'élément roulant est agencé dans l'espace de roulement ; et
la pièce (70) élastique de verrouillage est un ressort de verrouillage.

6. Essieu monté à jauge variable selon revendication 4, comprenant en outre un mécanisme (100) de conversion de la poussée, et des corps de boîte d'essieu agencés aux deux extrémités de l'essieu et à l'extérieur des roues ;
le mécanisme de conversion de la poussée comprend une base (101) de montage et un arbre de levage (102), dans lequel la base de montage est agencée sur une extrémité extérieure du corps de la boîte d'essieu près d'une extrémité de la tige (90) de poussée, et est pourvue d'un trou horizontal traversant le long de la direction axiale de chaque corps de boîte d'essieu ;
l'arbre de levage est inséré de manière mobile dans le trou horizontal traversant et est opposé à la tige de poussée, et une fente ouverte est prévue dans l'un de l'arbre de levage et de la base de montage à une position opposée de l'arbre de levage à la base de montage et a un axe perpendiculaire à l'axe du trou horizontal traversant; une pièce de positionnement est agencée dans la fente ouverte et reliée à la fente ouverte par une pièce élastique préchargée ; l'autre arbre de levage et la base de montage sont pourvus d'un évidement de positionnement correspondant à une extrémité de positionnement de la pièce de positionnement ; et
l'extrémité de positionnement de la pièce de positionnement est agencée dans l'évidement de positionnement et, lorsque l'arbre de levage est verrouillé, l'arbre de levage est poussé de manière à ce que l'extrémité de positionnement de la pièce de positionnement se dégage de l'évidement de positionnement, pour permettre à l'arbre de levage d'être mobile pour pousser la tige de poussée.

7. Essieu monté à jauge variable selon revendication 6, dans lequel la base de montage comprend un corps (101-1) de base et une base (101-3) d'extension s'étendant sur un côté le long du corps de base, et le corps de base et la base d'extension sont reliés l'un à l'autre par une base (101-2) de connexion de transition de forme de tronc ayant une grande extrémité reliée au corps de base et une petite extrémité reliée à la base d'extension, et une périphérie du corps de base est pourvue de trous de connexion et le trou horizontal traversant pénètre à travers la base d'extension, la base de connexion de transition et le corps de base.

8. Essieu monté à jauge variable selon revendication 7, dans lequel un côté inférieur de la base d'extension est pourvu d'une encoche pénétrant à travers une de ses extrémités ;
une partie de levage (102-1) s'étend vers le bas à partir d'une extrémité extérieure de l'arbre de levage, et l'extrémité extérieure de l'arbre de levage est au même niveau qu'une extrémité extérieure de la base d'extension lorsque l'extrémité de positionnement de la pièce de positionnement est agencée dans l'évidement de positionnement ; et
lorsque la partie de levage est poussée, l'extrémité de positionnement de la pièce de positionnement se dégage de l'évidement de positionnement et se déplace le long de l'encoche.

9. Essieu monté à jauge variable selon revendication 7, dans lequel l'extrémité extérieure de la base d'extension est pourvue d'un presse-étoupe (106) de levage ;
l'extrémité extérieure de l'arbre de levage est pourvue d'une partie de connexion s'étendant vers le bas et inclinée dans une direction opposée au presse-étoupe de levage, et la partie de levage est formée à une extrémité libre de la partie de connexion, et est pourvue d'une surface plane verticale ; et
un bloc de friction est agencé sur la surface plane verticale de la partie de levage.

10. Essieu monté à jauge variable selon revendication 6 à 9, dans lequel la pièce de positionnement est une goupille (103) de positionnement ayant une extrémité de positionnement configurée pour avoir une surface d'arc convexe, et l'évidement de positionnement est configuré pour avoir une surface d'arc concave correspondant à la surface d'arc convexe ; et une partie de la surface d'arc convexe est agencée dans la surface d'arc concave ; et
la pièce élastique préchargée est un ressort préchargé dont une extrémité est fixée dans la fente ouverte et dont l'autre extrémité est fixée et manchonnée sur une extrémité de la broche de positionnement distale de l'extrémité de positionnement.

11. Essieu monté à jauge variable selon revendication 6 à 9, dans lequel une bague de support d'arbre de levage est fixée à l'extrémité de l'essieu et est disposée coaxialement avec le trou (15) central traversant; la bague de support d'arbre de levage s'étend partiellement à l'intérieur du trou central traversant et a un diamètre intérieur correspondant à un diamètre extérieur de l'arbre de levage ; l'arbre de levage entre dans le trou central traversant à travers la bague de support d'arbre de levage et est configuré pour pousser la tige de poussée.

12. Véhicule ferroviaire, comprenant une caisse de véhicule et un bogie disposé sous la caisse de véhicule, dans lequel chaque bogie est équipé d'un essieu monté à jauge variable selon l'une des revendications 1 à 11.
